# EUROPÄISCHE PATENTSCHRIFT

(11) **EP 0 529 250 B1**
(45) Veröffentlichungstag und Bekanntmachung des Hinweises auf die Patenterteilung: **21.09.1994**
(21) Anmeldenummer: 92111549.9
(22) Anmeldetag: 08.07.1992
(51) Int. Cl.: B60K 13/04, F16F 1/46, F16F 1/52, F16L 55/033, F01N 7/18

(54) **Elastische Aufhängung für eine Abgasanlage eines Kraftfahrzeuges**
Elastic suspension for the exhaust device of a motor vehicle
Suspension élastique de pots d'échappement d'un véhicule à moteur

(30) Priorität: 22.08.1991 DE 4127728
(43) Veröffentlichungstag der Anmeldung: 03.03.1993
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Kaiser, Mathias, W-5020 Frechen (DE)
(74) Vertreter: Messulam, Alec Moses

(56) Entgegenhaltungen:
- EP-A- 0 258 852
- EP-A- 0 411 246
- DE-A- 1 750 936
- DE-A- 2 658 358
- DE-C- 3 445 491
- GB-A- 1 454 145
- GB-A- 2 084 091

## Beschreibung

Die Erfindung bezieht sich auf eine elastische Aufhängung für eine Abgasanlage eines Kraftfahrzeuges, der im Oberbegriff des Patentanspruches 1 erläuterten Art.

Aus der DE-PS 26 58 358 ist eine elastische Aufhängung für eine Abgasanlage eines Kraftfahrzeuges, der im Oberbegriff des Patentanspruches 1 erläuterten Art bekannt.

Bei dieser elastischen Aufhängung sind in einer rhombusförmigen zugfesten Schlaufe mit angeformten Stegen aus elastischem Material obere und untere Halteöffnungen zur Aufnahme von Haltebügeln am Kraftfahrzeug bzw. an der Abgasanlage bekannt, wobei beide Halteöffnungen jeweils im Scheitel der Schlaufe angeordnet sind und dementsprechend werden die durch das Gewicht und die Vibrationen der Abgasanlage in die elastische Aufhängung eingeleiteten Kräfte im wesentlichen durch Zug- und Druckkräfte abgestützt.

Aus der DE-PS 34 45 491 ist eine elastische Aufhängung für eine Abgasanlage eines Kraftfahrzeuges bekannt, bei der ein elastisches Aufhängungselement über einen U-förmigen Bügel am Fahrzeugboden befestigt wird und das elastische Aufhängungselement eine Halteöffnung für einen Haltebügel der Abgasanlage aufweist, wobei diese Halteöffnung über seitliche schräg nach oben und schräg nach unten verlaufende elastische Stege abgestützt ist.

Diese elastischen Stege werden auf Druck und Schub bzw. Zug und Schub beansprucht.

Diese bekannte elastische Aufhängung weist den Nachteil auf, daß die Befestigung am Kraftfahrzeug aufwendiger durch Verschrauben des Metallbügels erfolgen muß und nicht durch einfaches Einhängen der elastischen Aufhängung an Haltebügeln am Kraftfahrzeug zu bewerkstelligen ist.

Die Aufgabe der Erfindung ist es, eine elastische Aufhängung für eine Abgasanlage eines Kraftfahrzeuges, der im Oberbegriff des Patentanspruches 1 erläuterten Art derart zu verbessern, daß die bevorzugte Beanspruchung der elastischen Stege auf Druck und Schub erreicht werden kann, ohne hierdurch eine aufwendigere Befestigung der Anordnung am Kraftfahrzeug in Kauf nehmen zu müssen.

Gemäß der Erfindung wird diese Aufgabe gelöst, indem eine elastische Aufhängung für eine Abgasanlage eines Kraftfahrzeuges, der im Oberbegriff des Patentanspruches 1 erläuterten Art, die im Kennzeichenteil des Patentanspruches 1 aufgezeigten Merkmale aufweist.

Dadurch, daß die untere Halteöffnung über sich seitlich schräg nach unten an den unteren Seiten der rhombusförmigen Schlaufe abstützende Stege mit der zugfesten Schlaufe verbunden ist, wird auf einfache Weise ein Befestigen der elastischen Aufhängung nur durch Einhängen der Haltebügel am Kraftfahrzeug bzw. an der Abgasanlage ermöglicht und dennoch die besseren Dämpfungseigenschaften durch die im wesentlichen auftretende Schubspannung erreicht.

Vorzugsweise wird die untere Halteöffnung über eine eingeformte, trogförmige Versteifung an den seitlichen schrägen Stegen abgestützt.

An der oberen Halteöffnung ist zweckmäßigerweise eine nach unten vorspringende Anschlagnase ausgebildet, die übermäßige Hubbewegungen der Abgasanlage dämpfend begrenzt.

An der unteren Basis der zugfesten Schlaufe ist vorzugsweise ein nach oben vorragender Anschlagpuffer ausgebildet, der übermäßige Bewegungen der Abgasanlage nach unten abdämpfend begrenzt.

Die Erfindung wird anhand eines in der Zeichnung gezeigten Ausführungsbeispieles näher erläutert. Es zeigt:

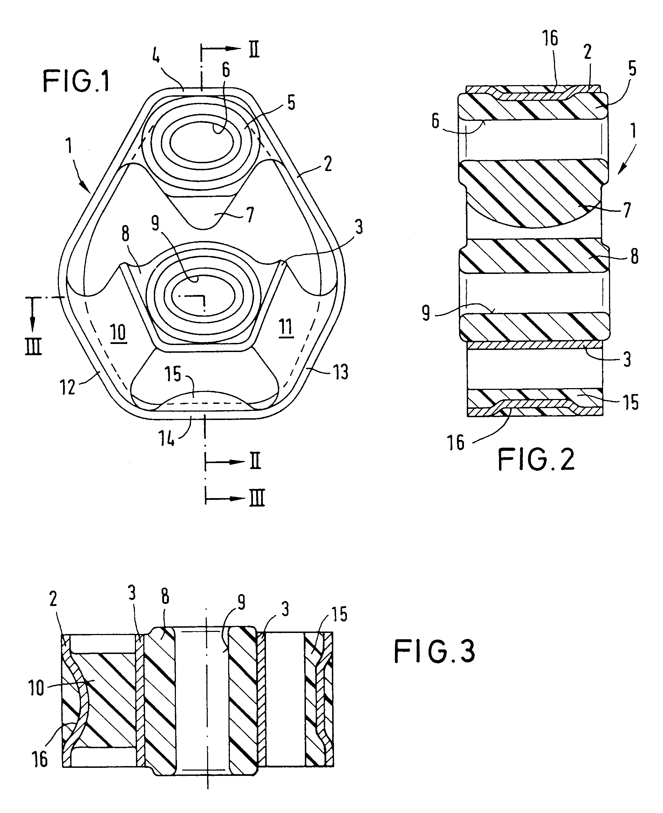

- Fig. 1: eine Ansicht einer elastischen Aufhängung gemäß der Erfindung;
- Fig. 2: einen vertikalen Schnitt entlang der Linie II-II und
- Fig. 3: einen Schnitt entlang der Linie III-III.

Die erfindungsgemäße elastische Aufhängung 1 besteht aus einer rhombusförmigen, zugfesten Schlaufe 2, die im vorliegenden Fall als Blechpreßteil ausgebildet ist, die jedoch auch als ein entsprechendes Formteil aus ggf. faserverstärkten Kunststoffwerkstoff bestehen kann.

Eine trogförmige Versteifung 3 kann gleichfalls als Blechteil oder als ein entsprechendes Kunststofformteil ausgebildet sein.

Im oberen Scheitel 4 der zugfesten Schlaufe 2 ist ein Körper 5 aus elastischem Material angeformt, in dem eine Halteöffnung 6 und eine Anschlagnase 7 ausgebildet sind.

An der trogförmigen Versteifung 3 ist ein innerer elastischer Körper 8 angeformt, in dem eine Halteöffnung 9 ausgebildet ist. An der Außenseite der trogförmigen Versteifung 3 sind elastische Stege 10 und 11 angeformt, die sich seitlich schräg nach unten erstrecken und an den unteren schrägen Seiten 12 und 13 der rhombusförmigen Schlaufe 2 angeformt abgestützt sind. An der Basis 14 der rhombusförmigen Schlaufe 2 ist ein Anschlagpuffer 15 angeformt.

Vorzugsweise wird die elastische Aufhängung 1 in der Form hergestellt, daß Blechteile, wie die rhombusförmige Schlaufe 2 und die trogförmige Versteifung 3, in eine Form eingelegt werden und durch elastisches Material umspritzt werden, wobei die elastischen Körper 5, 8, 10, 11 und 15 miteinander in Zusammenhang stehen können.

Andererseits ist es jedoch auch möglich, für die elastischen Körper 5 und 8, die die Halteöffnungen 6 und 9 bilden, ein anderes Material zu wählen, z.B. ein Material mit höherer Temp. Beständigkeit, als das Material für die sich schräg nach unten erstreckenden auf Druck und Schub beanspruchten Stege 10 und 11, die wegen der erwünschten Isolierfunktion vorzugsweise aus Naturkautschuk mit geringer dynamischer Verhärtung bestehen.

Die aus Naturkautschuk mit geringer dynamischer Verhärtung bestehenden seitlich schrägen Stege 10 und 11 können durch die Strahlungswärme der Abgasanlage einer zu hohen Wärmebelastung ausgesetzt sein. In diesem Fall kann die erfindungsgemäße elastische Aufhängung in gegenüber der Darstellung in der Zeichnung um 180° gedrehter Lage eingebaut werden, wobei die Stege 10 und 11 auf Zug und Schub beansprucht werden.

Durch eine entsprechende Profilierung 16 des Außenumfanges der zugfesten Schlaufe 2 kann sichergestellt werden, daß die Verankerung des angeformten elastischen Materials in einer Weise erfolgt, die ein rückstellendes Zentrieren der Halteöffnungen 6 und 9 bei in Längsrichtung der Halteöffnungen erfolgenden Auslenkungen erreicht wird.

## Patentansprüche

1. Elastische Aufhängung für eine Abgasanlage eines Kraftfahrzeuges, mit einer rhombusförmigen, zugfesten Schlaufe (2) mit angeformten Stegen aus elastischem Material und oberen und unteren Halteöffnungen (6 und 9) zur Aufnahme von Haltebügeln am Kraftfahrzeug und an der Abgasanlage, wobei die eine Halteöffnung (6) im Scheitel (4) der zugfesten Schlaufe (2) angeordnet ist,
**dadurch gekennzeichnet**, daß
- die untere Halteöffnung (9) über sich seitlich schräg nach unten erstreckende auf Druck und Schub belastete Stege (10 und 11) an den unteren Seiten (12 und 13) der rhombusförmigen, zugfesten Schlaufe (2) abgestützt ist.

2. Elastische Aufhängung nach Anspruch 1,
**dadurch gekennzeichnet**, daß
- die untere Halteöffnung (9) über eine eingeformte, trogförmige Versteifung (3) an den schräg nach unten verlaufenden Stegen (10 und 11) abgestützt ist.

3. Elastische Aufhängung nach den Ansprüchen 1 und 2,
**dadurch gekennzeichnet**, daß
- an dem die obere Halteöffnung (6) aufweisenden elastischen Körper (5) eine nach unten vorspringende Anschlagnase (7) ausgebildet ist.

4. Elastische Aufhängung nach den Ansprüchen 1 bis 3,
**dadurch gekennzeichnet**, daß
- an der unteren Basis (14) der zugfesten Schlaufe (2) ein nach oben vorragender Anschlagpuffer (15) angeformt ist.

5. Elastische Aufhängung nach den Ansprüchen 1 bis 4,
**dadurch gekennzeichnet**, daß
- am Umfang der rhombusförmigen, zugfesten Schlaufe (2) eine sich nach innen wölbende, umlaufende Einprägung (16) ausgebildet ist.

6. Elastische Aufhängung nach den Ansprüchen 1 bis 5,
**dadurch gekennzeichnet**, daß
- sowohl die rhombusförmige, zugfesten Schlaufe (2) als auch die trogförmige Versteifung (3) aus einem geeigneten, ggf. faserverstärktem Kunststoffwerkstoff ausgebildet ist.

7. Elastische Aufhängung nach den Ansprüchen 1 bis 6,
**dadurch gekennzeichnet**, daß
- die sich von der unteren Halteöffnung (9) seitlich schräg nach unten erstreckenden Stege (10 und 11) aus einem Material mit geringerer dynamischen Verhärtung, z.B. Naturkautschuk bestehen.

8. Elastische Aufhängung nach den Ansprüchen 1 bis 7,
**dadurch gekennzeichnet**, daß
- die rhombusförmige, zugfeste Schlaufe (2) um 180° gedreht eingebaut ist und die Stege (10 und 11) auf Zug und Schub belastet sind.

## Claims

1. A resilient hanger for an exhaust system of a motor vehicle, comprising a rhombus-shaped, high tensile strength loop (2) having moulded-on webs of resilient material and upper and lower mounting openings (6 and 9) to receive mounting brackets on the motor vehicle and on the exhaust system, one of said mounting openings (6) being located in the crown (4) of the high tensile strength loop (2), characterised in that
- the lower mounting opening (9) is supported on the lower sides (12 and 13) of the rhombus-shaped, high tensile strength loop by way of lateral, downwardly inclined, compressively- and shear-loaded webs (10 and 11).

2. A resilient hanger according to claim 1,
characterised in that
- the lower mounting opening (9) is supported on the downwardly inclined webs (10 and 11) through a moulded, trough-shaped stiffener (3).

3. A resilient hanger according to claim 1 or claim 2,
characterised in that
- a downwardly-projecting stop lug (7) is formed on the resilient body (5) with the upper mounting opening (6).

4. A resilient hanger according to any of claims 1 to 3,
characterised in that
- an upwardly-projecting buffer stop (15) is moulded on to the lower base (14) of the high tensile strength loop (2).

5. A resilient hanger according to any of claims 1 to 4,
characterised in that
- an inwardly convex circumferential indentation (16) is formed on the circumference of the rhombus-shaped, high tensile strength loop (2).

6. A resilient hanger according to any of claims 1 to 5,
characterised in that
- both the rhombus-shaped, high tensile strength loop (2) and the trough-shaped stiffener (3) are formed of a suitable, possibly fibre-reinforced, plastics material.

7. A resilient hanger according to any of claims 1 to 6,
characterised in that
- the lateral, downwardly-inclined webs (10 and 11) extending from the lower mounting opening (9) consist of a material exhibiting relatively low dynamic hardening such as natural rubber.

8. A resilient hanger according to any of claims 1 to 7,
characterised in that
- the rhombus-shaped, high tensile strength loop (2) is installed rotated through 180° and the webs (10 and 11) are tension- and shear-loaded.

## Revendications

1. Suspension élastique four un système d'échappement d'un véhicule à moteur, comprenant une boucle (2) en forme de losange et résistante à la traction avec des ailes en un matériau élastique et des orifices de retenue inférieurs et supérieurs (6 et 9) pour y loger des étriers de retenue du véhicule à moteur et du système d'échappement, sachant que l'un des orifices de retenue (6) est disposé dans le sommet (4) de la boucle (2) résistante à la traction, caractérisée en ce que l'orifice de retenue inférieur (9) est supporté par des ailes (10 et 11) s'étendant latéralement en biais vers le bas et soumises à la pression et au cisaillement sur les faces inférieures (12 et 13) de la boucle (2) en forme de losange et résistante à la traction.

2. Suspension élastique selon la revendication 1, caractérisée en ce que l'orifice de retenue inférieur (9) est supporté par un raidisseur (3) intégré en forme d'auge sur les ailes (10 et 11) s'étendant en biais vers le bas.

3. Suspension élastique selon les revendications 1 et 2, caractérisée en ce que sur le corps (5) élastique présentant l'orifice de retenue supérieur (6) est réalisé un mentonnet de butée (7) faisant saillie vers le bas.

4. Suspension élastique selon les revendications 1 à 3, caractérisée en ce que sur la base inférieure (14) de la boucle (2) résistante à la traction est réalisé un tampon de butée (15) faisant saillie vers le haut.

5. Suspension élastique selon les revendications 1 à 4, caractérisée en ce que sur le pourtour de la boucle (2) en forme de losange et résistante à la traction est réalisée une empreinte (16) circulaire et concave.

6. Suspension élastique selon les revendications 1 à 5, caractérisée en ce qu'à la fois la boucle (2) en forme de losange et résistante à la traction et le raidisseur (3) en forme d'auge sont réaliséss en une matière plastique appropriée, le cas échéant renforcée par des fibres.

7. Suspension élastique selon les revendications 1 à 6, caractérisée en ce que les ailes (10 et 11) s'étendant en biais vers le bas à partir de l'orifice de retenue inférieur (9) se composent d'un matériau à faible durcissement dynamique, par exemple de caoutchouc naturel.

8. Suspension élastique selon les revendications 1 à 7, caractérisée en ce que la boucle (2) en forme de losange et résistante à la traction est montée tournée de 180° et en ce que les ailes (10 et 11) sont soumises à la traction et au cisaillement.
